# FASCICULE DE BREVET EUROPEEN

(11) **EP 2 967 254 B1**
(45) Date de publication et mention de la délivrance du brevet: **19.05.2021**
(21) Numéro de dépôt: 13795823.7
(22) Date de dépôt: 22.10.2013
(51) Int. Cl.: A47J 37/00, A47J 37/07

(54) **APPAREIL DE CUISSON COMPRENANT AU MOINS DEUX PANNEAUX AMOVIBLES**
GRILL MIT MINDESTENS ZWEI ABNEHMBAREN PANELEN
GRILL WITH AT LEAST TO REMOVEABLE PANELS

(30) Priorité: 13.03.2013 FR 1352232
(43) Date de publication de la demande: 20.01.2016
(73) Titulaire: Application des Gaz, 69230 Saint-Genis Laval (FR)
(72) Inventeur: GRAMOLA, Massimo, 25015 Desenzano Del Garda (IT); MARAVIGLIA, Mirco, 25017 Centenaro Di Lonato Del Garda (IT); MICHELE, Moschini, 25017 Centenaro Di Lonato Del Garda (IT); CURSOUX, Bruno, 69440 Mornant (FR); PAYSANT, Christophe, 42000 Saint Etienne (FR)
(74) Mandataire: Style, Kelda Camilla Karen
(86) Numéro de dépôt international: PCT/FR2013/052525
(87) Numéro de publication internationale: WO 2014/140435

(56) Documents cités:
- EP-A1- 0 180 849
- EP-A1- 2 143 361
- DE-U1-202012 001 233
- GB-A- 971 185
- US-A- 4 492 215
- US-A- 4 869 228
- US-A- 6 035 768
- US-A- 6 038 965
- US-A1- 2002 050 274
- US-A1- 2003 230 299
- US-A1- 2009 090 348
- US-A1- 2010 175 682
- US-A1- 2011 061 543
- US-A1- 2011 100 351
- US-A1- 2012 000 457
- US-B1- 6 672 303
- US-B1- 8 387 610

## Description

La présente invention concerne un appareil de cuisson comprenant une grille et/ou plaque de cuisson sous laquelle s'étend un puits de cuisson comprenant au moins deux panneaux amovibles.

Il est connu de disposer d'un appareil de cuisson présentant un puits de cuisson au-dessus duquel est disposée une grille et/ou plaque de cuisson pour un aliment.

La chaleur nécessaire à la cuisson est générée à l'intérieur du puits de cuisson par une source de chaleur comme un brûleur. La chaleur se dirige vers le haut du puits de cuisson et chauffe l'aliment disposé sur la grille et/ou plaque de cuisson.

GB971185A divulgue un appareil de cuisson (portable kitchen 1) comprenant une enceinte de cuisson. L'enceinte de cuisson comprend une paroi latérale (windshield 6) comportant un panneau arrière gauche (left panel 17) et un panneau arrière droit (right panel 17).

US6035768A divulgue un appareil de cuisson (portable barbecue) comprenant une enceinte de cuisson (cooking chamber). L'enceinte de cuisson comprend une paroi latérale comportant un panneau arrière (vent panel 300) et un panneau avant (access panel 700).

EP0180849A1 divulgue un appareil de cuisson comprenant une enceinte de cuisson. L'enceinte de cuisson comprend une parois latérale comportant des panneaux.

US4492215A divulgue un appareil de cuisson (outdoor grill 10) comprenant une enceinte de cuisson. L'enceinte de cuisson (housing 12) comprend une paroi latérale comportant un panneau arrière (rear wall 20) et un panneau avant (rear wall 18).

DE202012001233U1 divulgue un appareil de cuisson (camping grill) comprenant une enceinte de cuisson. L'enceinte de cuisson comprend une paroi latérale comportant un panneau avant et un panneau arrière.

US6672303B1 divulgue un appareil de cuisson (grill 100) comprenant une enceinte de cuisson (grilling module 121). L'enceinte de cuisson comprend une paroi latérale comportant un panneau avant (front wall 141), un panneau arrière gauche (left rear wall 144) et un panneau arrière droit.

US2011/100351A1 divulgue un appareil de cuisson (grilling device 10) comprenant une enceinte de cuisson. L'enceinte de cuisson comprend une paroi latérale comportant un panneau avant (front baffle plate 20) et un panneau arrière (rear baffle plate).

US2002/050274A1 divulgue un appareil de cuisson (portable cooking apparatus) comprenant une enceinte de cuisson. L'enceinte de cuisson comprend une paroi latérale comportant un panneau inférieur (wind screen 101) et un panneau supérieur (fire ring 114).

US2003/230299A1 divulgue un appareil de cuisson (portable stove apparatus 20) comprenant une enceinte de cuisson (housing 21). L'enceinte de cuisson comprend une paroi latérale comportant un panneau arrière inférieur (lower rear wall 21b), un panneau arrière supérieur (higher rear wall 21b), un panneau avant inférieur (lower front wall 21a) et un panneau avant supérieur.

EP2143361A1 divulgue un appareil de cuisson (barbecue grill assembly 10) comprenant une enceinte de cuisson (cooking chamber 12). L'enceinte de cuisson comprend une paroi latérale comportant un panneau arrière inférieur (lower rear wall 91a), un panneau arrière supérieur (higher rear wall 91b) et un panneau avant (lower front wall 93).

US2012/000457A1 divulgue un appareil de cuisson (appareil de cuisson 2) comprenant une enceinte de cuisson (puit de cuisson 3). L'enceinte de cuisson comprend une paroi latérale comportant deux panneaux opposés.

US2010/175682A1 divulgue un appareil de cuisson (cooking appliance 2) comprenant une enceinte de cuisson (cooking shaft 3). L'enceinte de cuisson comprend une paroi latérale comportant deux panneaux opposés.

US8387610B1 divulgue un appareil de cuisson (barbecue 100) comprenant une enceinte de cuisson (combustion chamber 2.2). L'enceinte de cuisson comprend une paroi latérale comportant au moins deux panneaux.

US8387610B divulgue un appareil de cuisson (grill assembly 10) comprenant une enceinte de cuisson. L'enceinte de cuisson comprend une paroi latérale comportant un panneau avant et un panneau arrière.

US6038965A divulgue un appareil de cuisson (barbecue grill 68) comprenant une enceinte de cuisson (lid casing 12). L'enceinte de cuisson comprend un panneau avant et un panneau arrière.

US2011/0615543A1 divulgue un appareil de cuisson (barbecue 100) comprenant une enceinte de cuisson (charcoal tray 200). L'enceinte de cuisson comprend une paroi latérale comportant des panneaux avant et des panneaux arrière.

US4869228A divulgue un appareil de cuisson (barbecue) comprenant une enceinte de cuisson (expansion sleeve). L'enceinte de cuisson L'enceinte de cuisson comprend une paroi latérale comportant des panneaux avant et des panneaux arrière.

Il est connu d'utiliser un tel appareil de cuisson pour cuire des aliments produisant un résidu liquide gras lors de la cuisson comme la viande. Le résidu liquide s'écoule vers l'intérieur du puits de cuisson à travers la grille de cuisson ou à travers d'ouvertures prévues à cet effet dans la plaque de cuisson.

Selon l'état de la technique, le puits de cuisson présente une enceinte interne pourvue de moyens de guidage de résidus liquides vers une zone de recueil à l'intérieur du puis. La zone de recueil est quant à elle pourvue de moyens de vidange pour évacuer les résidus du puits.

Ces moyens de guidage donnent satisfaction en ce que les résidus liquides des aliments ne s'insinuent pas à l'intérieur de l'appareil de cuisson et peuvent être évacués du puits après la cuisson.

Toutefois, une partie des résidus liquides adhère à l'enceinte le long des moyens de guidage, ce qui créé des salissures lorsque les résidus liquides sèchent. Il faut alors procéder à un nettoyage des moyens de guidage de l'enceinte. Ce nettoyage peut s'avérer problématique car les moyens de guidage ne sont pas forcément facilement accessibles. L'enceinte peut également être démontée. Dans ce cas le démontage et la manipulation des éléments constituant l'enceinte peut s'avérer fastidieuse.

La solution au problème technique est apportée par l'objet de la revendication indépendante 1, définissant en soi l'invention. Des modes de réalisation préférés sont décrits dans les revendications dépendantes 1 à 10.

Le document vise à résoudre tout ou partie des inconvénients mentionnés ci-dessus A cet effet, le présent document concerne un appareil de cuisson comprenant un puits de cuisson définissant une enceinte de cuisson présentant une ouverture supérieure, une grille et/ou plaque de cuisson positionnée en regard de l'ouverture, au moins un brûleur présentant au moins une partie chauffante disposée dans l'enceinte de cuisson.

L'enceinte de cuisson comprend une paroi latérale interne comportant au moins deux panneaux amovibles destinés à être solidarisés à un support compris dans l'appareil dans lequel un premier panneau amovible et un second panneau amovible adjacent présentent une zone de recouvrement.

Selon un aspect, le premier panneau amovible comprend un bord superposé à un bord du second panneau dans la zone de recouvrement. Selon un aspect, le premier et le second bord s'étendent de façon sensiblement parallèle dans la zone de recouvrement.

Selon un aspect, la zone de recouvrement s'étend selon une ligne de pente commune aux premier et second panneaux amovibles.

Selon un aspect, la ligne de pente commune est continue. Selon une première variante, la ligne de pente commune est comprise dans un plan transversal au premier panneau amovible et au deuxième panneau amovible, ce plan pouvant être vertical ou oblique par rapport à la verticale.

Selon une seconde variante, la ligne de pente commune peut s'étendre hors du plan transversal, par exemple en présentant un profil courbe ou un profil comprenant plusieurs segments.

Selon un aspect, chaque panneau s'étend en regard de l'enceinte de cuisson et présente une pente orientée vers l'intérieur du puits de cuisson.

Selon un aspect, le premier panneau amovible présente une complémentarité de forme avec le second panneau amovible sur la première zone de recouvrement.

Selon un aspect, le premier panneau présente une bordure dans la zone de recouvrement, la bordure étant un profilé selon la ligne de pente commune, le profilé présentant une forme convexe par rapport à l'intérieur du puits de cuisson et une forme concave par rapport à l'extérieur du puits de cuisson.

Selon un aspect, l'enceinte de cuisson comprend un troisième panneau amovible transverse au premier panneau amovible, les premier et troisième panneaux présentant une zone de recouvrement s'étendant transversalement à la pente du premier panneau en regard d'un rabat ménagé sur le premier ou sur le troisième panneau.

Selon un aspect, au moins un panneau présente une encoche ménageant un espace de l'enceinte pour un emplacement d'un brûleur.

Selon un aspect, l'encoche se situe à la base de la pente du panneau présentant l'encoche.

Selon un aspect, une portion interne réalisant un contour horizontal du puits de cuisson est constituée par une pluralité de panneaux, chaque panneau présentant avec le panneau adjacent une zone de recouvrement.

Selon un aspect, le support de l'enceinte de cuisson comprend un cadre entourant l'ouverture supérieure, les panneaux amovibles comprenant des moyens de solidarisation amovibles au cadre.

Selon un aspect, le support comprend un ensemble de profilés s'étendant à partir du cadre autour du puits de cuisson, des ouvertures du support étant ménagées entre les profilés.

Selon un aspect, l'enceinte de cuisson comprend au moins un réservoir amovible constituant une zone de recueil de résidus de cuisson.

Selon un aspect, les panneaux forment des moyens de protection de l'intérieur de l'appareil et de guidage de résidus de cuisson vers le réservoir.

Selon un aspect, le réservoir comprend un plateau amovible délimitant une partie inférieure du puits de cuisson.

De préférence, le plateau présente un rebord périphérique s'étendant vers le haut du puits de cuisson.

Selon un aspect, le réservoir s'étend selon au moins une direction horizontale vers l'extérieur du puits au-delà de la base de la pente du panneau attenant. Selon un aspect de l'invention, le réservoir est ménagé à distance des panneaux.

De toute façon le document sera bien compris à l'aide de la description qui suit en référence au dessin schématique annexé représentant, à titre d'exemple non limitatif, une forme d'exécution de cet appareil de cuisson.
Figure 1 est une vue en perspective d'une partie supérieure d'un appareil de cuisson comprenant une plaque de cuisson.
Figure 2 est une vue en perspective de la partie supérieure de l'appareil de cuisson sans plaque de cuisson.
Figure 3 est une vue en perspective d'un puits de cuisson de l'appareil de cuisson.
Figure 4 est une vue de détail d'une zone de recouvrement de deux panneaux amovibles.
Figure 5 est une autre vue de détail d'une zone de recouvrement de deux panneaux amovibles.
Figure 6 à 8 sont des vues éclatées du puits de cuisson de l'appareil de cuisson.
Figure 9 est une vue de côté du puits de cuisson.
Figure 10 est un détail d'une vue de côté du puits de cuisson.

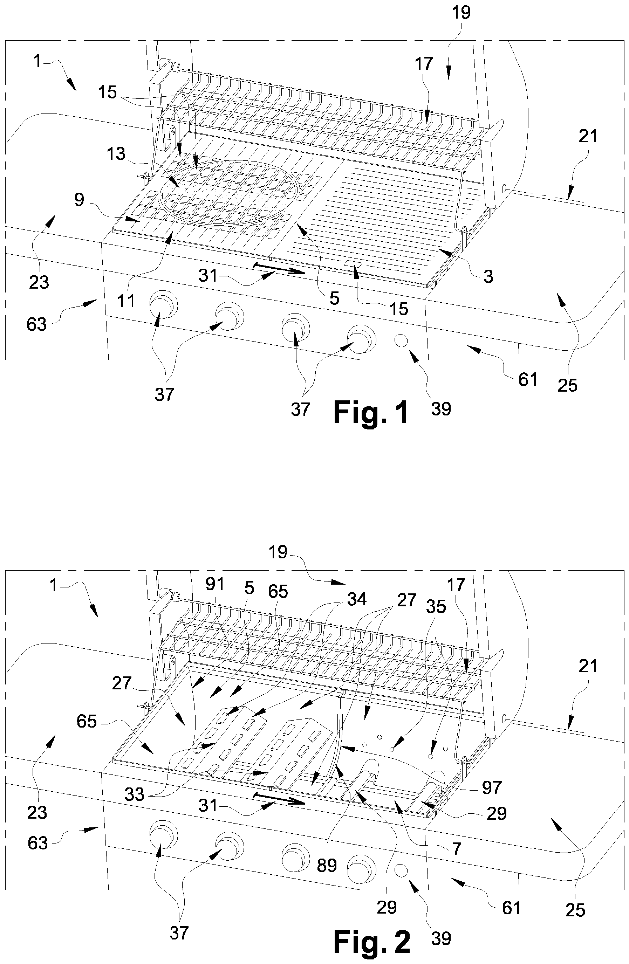

Comme illustré à la figure 1, un appareil de cuisson 1 comprend une plaque de cuisson 3 sensiblement horizontale disposée en regard d'une première portion d'une ouverture 5 d'un puits de cuisson 7. La plaque de cuisson 3 est rectangulaire et sensiblement plane.

L'appareil de cuisson 1 comprend une grille de cuisson 9 attenante à la plaque de cuisson 3 et disposée en regard d'une seconde portion de l'ouverture 5 du puits de cuisson 7. La grille de cuisson 9 est également sensiblement plane.

L'ensemble constitué de la plaque de cuisson 3 et de la grille de cuisson 9 correspond à l'ouverture 5.

La grille de cuisson 9 comprend un premier élément rectangulaire 11 pourvu d'une ouverture circulaire et d'un deuxième élément circulaire 13 disposé dans l'ouverture circulaire. La plaque de cuisson 3 et la grille de cuisson 9 sont pourvues d'ouvertures 15 mettant en communication fluidique le puits de cuisson 7 et l'extérieur.

L'appareil de cuisson 1 com prend une gril le supérieure s managée en regard et à distance de l'ouverture 5 du puits de cuisson 7. L'appareil de cuisson 1 comprend également un capot pivotant 19 autour d'un axe de rotation 21. A la figure 1, la capot pivotant 19 est en position relevée et soutient la grille supérieure 17. En position abaissée, le capot pivotant 19 se situe en regard de l'ouverture 5 du puits de cuisson 7 et recouvre la plaque de cuisson 3 et le grille de cuisson 9.

L'appareil de cuisson 1 comprend un premier plan de travail latéral gauche 23 et un deuxième plan latéral de travail droit 25, le plan de travail latéral gauche 23 étant attenant à la grille de cuisson 9 et le plan de travail latéral droit 25 étant attenant à la plaque de cuisson 3.

Le plan de travail latéral droit 25, le plan de travail latéral gauche 23, la grille de cuisson 9 et la plaque de cuisson 3 sont situées dans un même plan horizontal.

Comme illustré à la figure 2, l'ouverture 5 du puits de cuisson 7 correspond à l'emplacement de l'ensemble constitué de la plaque de cuisson 3 et de la grille de cuisson 9. L'intérieur du puits de cuisson 7 est délimité par une enceinte de cuisson 27.

Quatre brûleurs à gaz 29 sont disposés à l'intérieur du puits de cuisson 7. Les brûleurs 29 s'étendent selon une direction transversale à la direction principale 31 de l'ouverture 5 du puits de cuisson 7 par rapport à l'horizontale. Les brûleurs 29 sont régulièrement répartis à l'intérieur du puits de cuisson 7.

Une paroi transversale 33 de diffusion de chaleur est disposée à la verticale de chaque brûleur 29 entre le brûleur 29 et l'ouverture 5 du puis de cuisson 7. A la figure 2, seuls sont représentées les parois transversales 33 de diffusion des deux brûleurs 29 gauches. Chaque paroi transversale présente deux pentes 34 en direction de la partie inférieure du puits de cuisson 7. Les parois transversales 33 de diffusion des deux brûleurs 29 droits ne sont pas représentées pour laisser apparaître les brûleurs 29 et les points de fixation 35 des parois transversales 33 sur l'enceinte de cuisson 27.

Quatre boutons de réglages 37 sont disposés sur la paroi extérieure de l'appareil de cuisson 1 dans le prolongement des brûleurs 29 du côté opposé au capot pivotant 19 par rapport à l'ouverture 5 du puits de cuisson 7. Les boutons de réglages 37 sont agencés pour réguler l'alimentation en gaz des brûleurs 29.

Un voyant rouge 39 est disposé sur la paroi externe de l'appareil de cuisson 1 dans l'alignement des boutons de réglage 37 du côté droit. Le voyant rouge 39 est agencé pour s'allumer lorsqu'au moins un brûleur 29 est alimenté en gaz.

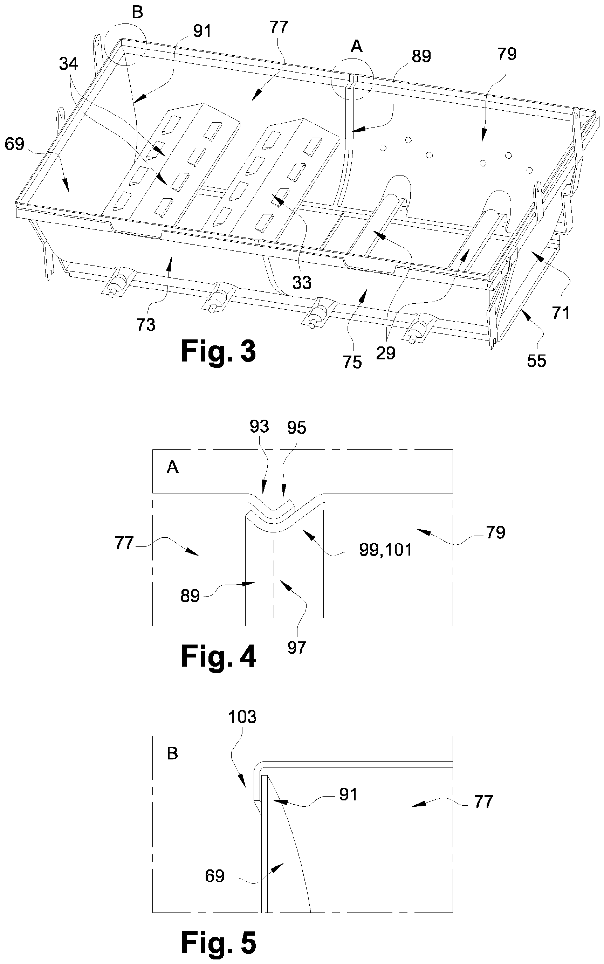

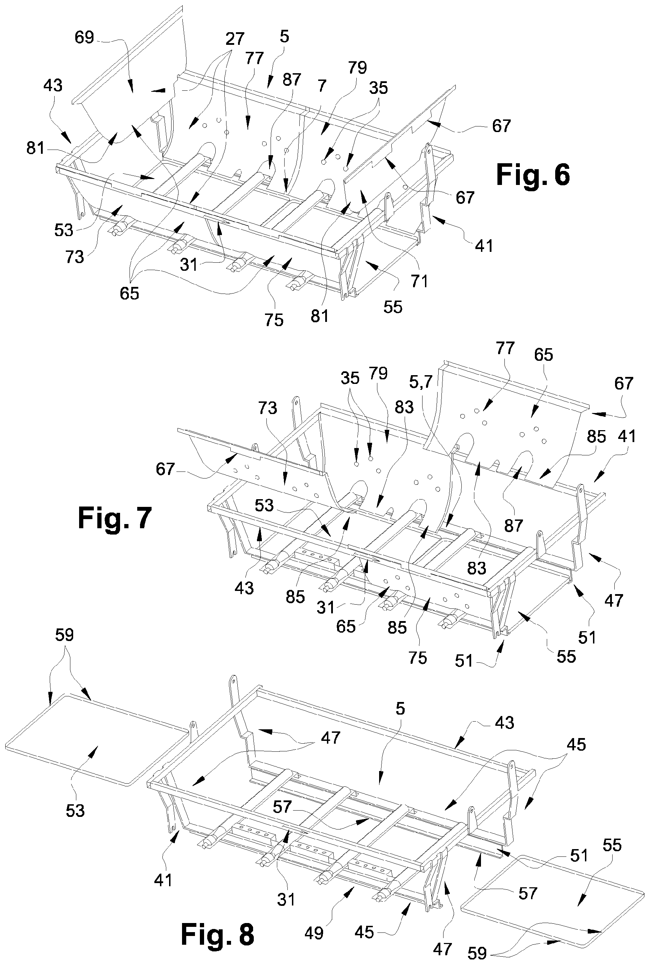

Comme illustré à la figure 3, Le puits de cuisson 7 est délimité dans la partie basse et latérale par l'enceinte de cuisson 27 et dans la partie haute par l'ouverture 5. Comme également illustré dans les vues éclatées des figures 6 à 8, l'enceinte de cuisson 7 comprend un support 41.

Le support 41 comprend un cadre 43 entourant l'ouverture 5 du puits de cuisson 7 et deux profilés 45 s'étendant à partir du cadre 43 selon la direction principale 31 de l'ouverture 5 par rapport à l'horizontale, autour de la partie latérale et inférieure du puits de cuisson 7.

Les profilés 45 présentent des parties sensiblement verticales 47 le long de la partie latérale du puits de cuisson 7 et deux parties horizontales 49 le long de la partie inférieure du puits de cuisson 7.

Les deux parties horizontales 49 des profilés 45 comprennent chacune un gu idage 51 pour réservoir comprenant un premier 53 et un deuxième 55 plateau. Chaque guidage 51 comprend une surface de support horizontale 57 des plateaux 53, 55. Les guidages 51 sont agencés pour que les plateaux 53, 55 coulissent selon la direction principale 31 de l'ouverture 5 par rapport à l'horizontale.

Les plateaux 53, 55 sont de forme rectangulaire et présentent un rebord 59 orienté vers l'ouverture 5 du puits de cuisson 7. Les plateaux 53, 55 peuvent coulisser le long des guidages 51 et être désolidarisés du support 41 comme illustré à la figure 8. Une première ouverture latérale 61 de l'appareil de cuisson 1 située sous le plan de travail latéral droit 25 et une deuxième ouverture latérale 63 de l'appareil de cuisson 1 située sous le plan de travail latéral gauche 23 permettent à un utilisateur de l'appareil de cuisson 1 de retirer les plateaux 53, 55 manuellement.

Comme illustré aux figures 3, 6 et 7, les plateaux 53, 55 peuvent être coulissés le long des guidages 51 jusqu'à une position insérée. En position insérée, les plateaux 53, 55 sont centrés horizontalement par rapport à l'ouverture 5 du puits de cuisson 7. En position insérée, les plateaux 53, 55 constituent une portion interne inférieure de l'enceinte de cuisson 27.

Comme illustré à la figure 3, la partie latérale interne de l'enceinte de cuisson 27 est constituée de panneaux 65 amovibles. Les panneaux 65 amovibles comprennent des moyens de solidarisation amovibles au cadre. Comme illustré à la figure 3, les moyens de solidarisation comprennent des crochets 67.

Les panneaux gauche 69 et droit 71 sont en contact avec les parties sensiblement verticales 47 des profilés 45 du support 41 . Les panneaux avant 73, 75 et arrière 77, 79 sont en contact avec les parties horizontales 49 des profilés 45.

La figure 3 présente les panneaux 65 en position insérés. En position insérés les panneaux 65 sont fixes. Toutefois les panneaux 65 peuvent être retirés du support 41. Pour ce faire, les panneaux 65 doivent être pivotés autour du cadre 43 de sorte à amener les parties basses des panneaux 65 vers le haut. Ensuite, les crochets 67 doivent être retirés du cadre 43 par une translation horizontale en direction de l'extérieur du puits de cuisson 7.

Les panneaux gauche 69 et droit 71 ou panneaux latéraux 69, 71 ont une direction d'extension transversale à la direction principale 31 d'extension de l'ouverture 5. Les panneaux gauche 69 et droit 71 sont sensiblement verticaux et présentent une légère pente en direction de l'intérieur du puits de cuisson 7.

Selon l'horizontale, les panneaux gauche 69 et droit 71 présentent une première avancée 81 vers l'intérieur du puits de cuisson 7 par rapport au rebord 59 attenant du plateau 53, 55 attenant et par rapport aux parties sensiblement verticales 47 attenantes du support.

Chaque panneau avant 73, 75 et arrière 77, 79 présente une pente en direction de l'intérieur du puits de cuisson 7. Selon l'horizontale, la base de la pente 83 de chaque panneau avant 73, 75 et arrière 77, 79 présente une seconde avancée 85 vers l'intérieur du puits de cuisson 7 par rapport au rebord 59 attenant du plateau 53, 55 attenant et par rapport aux parties horizontales 49 attenantes du support 41.

Chaque panneau avant 73, 75 et arrière 77, 79 présente également deux encoches 87 pour le passage des brûleurs 29. Les encoches 87 sont ménagées aux bases des pentes 83 des panneaux avant 73, 75 et arrière 77, 79 et s'étendent vers le haut. Il est à remarquer que les encoches 87 sont alignées verticalement avec les parois transversales 33.

Chaque panneau 65 présente avec le panneau 65 adjacent une zone de recouvrement 89, 91 par rapport à l'intérieur du puits de cuisson 7. Chaque panneau 65 comprend un bord superposé à un bord du panneau 65 adjacent dans la zone de recouvrement. Chaque zone de recouvrement 89, 91 s'étend selon une ligne pente commune audit panneau 65 et audit panneau 65 adjacent.

Chaque panneau avant 73, 75 ou arrière 77, 79 présente avec le panneau avant 73, 75 ou arrière 77, 79 adjacent une première zone de recouvrement 89.

Comme illustré à la figure 4, le panneau arrière gauche 77 et le panneau arrière droit 79 présentent une première zone de recouvrement 89.

Le panneau arrière gauche 77 présente une bordure 93 dans la première zone de recouvrement 89, la bordure 93 comprenant un profilé 95 selon la ligne de pente commune 97 avec le panneau arrière droit 79, le profilé 95 présentant une forme convexe par rapport à l'intérieur du puits de cuisson et une forme concave par rapport à l'extérieur du puits de cuisson 7.

Comme illustré à la figure 3 et selon le mode de réalisation présenté, la ligne de pente commune 97 est continue et est comprise dans un plan transversal au panneau arrière gauche 77 et au panneau arrière droit 79, ledit plan transversal étant vertical.

Selon une variante non représentée, ce plan transversal peut être oblique par rapport à la verticale.

Selon une autre variante non représentée, la ligne de pente commune 97 peut s'étendre hors du plan transversal, par exemple en présentant un profil courbe ou un profil comprenant plusieurs segments. Comme illustré à la figure 4 et selon le mode de réalisation présenté, la bordure 93 du panneau arrière gauche 77 est située derrière le panneau arrière droit 79 par rapport à l'intérieur du puits de cuisson 7.

Le panneau arrière droit 79 présente une forme complémentaire au panneau arrière gauche 77 dans la première zone de recouvrement 91 . Ainsi le panneau arrière droit 79 présente également une bordure 99 comprenant un profilé 101 selon la ligne de pente commune 97 avec le panneau arrière gauche 77. Le profilé 101 du panneau arrière droit 79 présente également une forme convexe par rapport à l'intérieur du puits de cuisson 7 et une forme concave par rapport à l'extérieur du puits de cuisson 7.

La première zon e d e recouvrement 89 des panneaux avant gauche 73 et avant droit 75 n'est pas décrite car il est similaire à l'agencement des panneaux arrière gauche 77 et arrière droit 79.

Chaque panneau avant 73, 75 ou arrière 77, 79 présente avec le panneau latéral 69, 71 adjacent une seconde zone de recouvrement 91.

Comme illustré à la figure 5, le panneau arrière gauche 77 présente un rabat transversal 103 par rapport à la direction principale 31 de l'ouverture 5 du puits de cuisson 7. Le rabat transversal 103 se situe en partie derrière le panneau gauche 69 par rapport à l'intérieur du puits de cuisson 7. Ce chevauchement du rabat transversal 103 et du panneau gauche 69 par rapport à l'intérieur du puits constitue la seconde zone de recouvrement 91 .

Les secondes zones de recouvrement 91 des panneaux latéraux 69, 71 avec les panneaux avant 73, 75 et le panneau arrière droit 79 ne sont pas décrites car elles sont identiques.

Ainsi les panneaux 65 constituent une portion interne réalisant un contour horizontal du puits de cuisson 7.

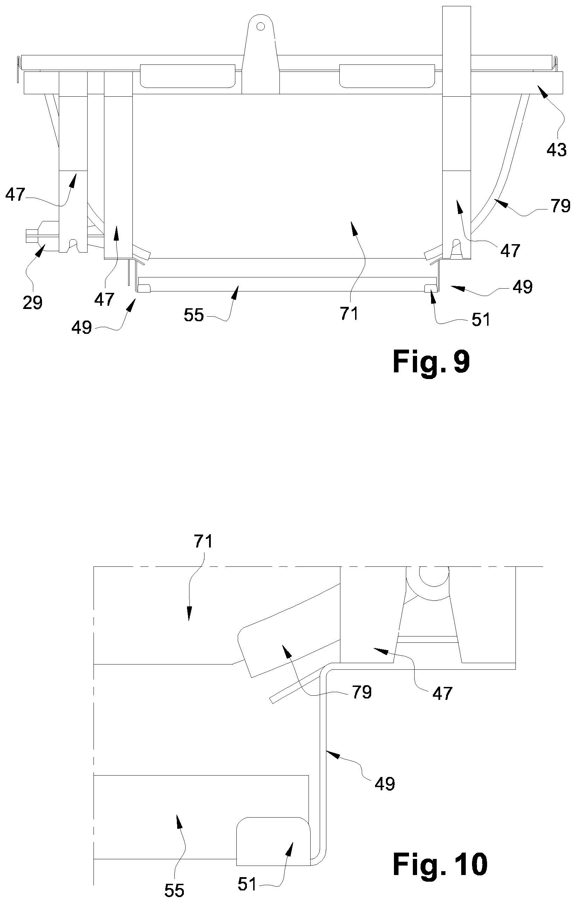

Comme il lustré aux figures 9 et 10, les plateaux 53, 55 sont distants des panneaux 65 pour permettre le coulissement des plateaux 53, 55 le long des guidages 51.

Ci-dessus, nous avons décrit l'appareil de cuisson 1 . Ci-dessous, son fonctionnement est expliqué dans un exemple d'utilisation pour la cuisson d'un aliment sur la plaque de cuisson 3 ou sur la grille de cuisson 9.

L'allumage des brûleurs 29 engendre une chaleur dégagée par la combustion. La chaleur est se diffuse vers le haut du puits de cuisson 7 par convection. Les parois transversales 33 situées au-dessus des brûleurs répartissent les courants de chaleur pour que l'ensemble de la surface de la grille de cuisson 9 et de la plaque de cuisson 3 soient uniformément chauffées.

Un aliment, comme par exemple un morceau de viande est disposé sur la grille de cuisson 9 ou la plaque de cuisson 3. En réaction au chauffage provoqué par la combustion, des résidus liquides sont évacués par la viande.

Les résidus liquides ruissellent sur la grille de cuisson 9 et la plaque de cuisson 3 pour pénétrer dans le puits de cuisson 7 à travers les ouvertures 15 de la plaque de cuisson 3 et la grille de cuisson 9.

Dans un premier cas, les résidus liquides peuvent chuter sur un des panneaux 65. Dans ce cas la pente des panneaux 65 guide les résidus liquides vers un des plateaux 53, 55. Les premières 81 ou deuxièmes 85 avancées des panneaux 65 permettent alors aux résidus liquides de ne pas s'insinuer à l'extérieur du puits de cuisson. Les résidus liquides arrivent sur un des plateaux 53, 55. Les rebords 59 des plateaux 53, 55 permettent aux résidus liquides de rester sur les plateaux 53, 55.

Dans un deuxième cas, les résidus liquides peuvent chuter sur les parois transversales 33. Dans ce cas les résidus liquides sont guidés par les pentes 34 des parois transversales 33 et tombent sur un des plateaux 53, 55. Les parois transversales 33 protègent d'un part les brûleurs 29 et d'autre part les encoches 87 de la chute de résidus liquides.

Dans un dernier cas de figure, les résidus liquides chutent directement dans un des plateaux 53, 55 depuis une ouverture 15 de la grille de cuisson 9 ou de la plaque de cuisson 3. Dans ce cas les panneaux 65 protègent contre les éclaboussures de résidus liquides. Ainsi les résidus liquides ne s'insinuent pas à l'extérieur du puits de cuisson 7 dans l'appareil de cuisson 1.

Suite à la cuisson de l'aliment, les plateaux 53, 55 peuvent être sortis de l'appareil de cuisson 1 pour vider les résidus liquides et pour être nettoyés. De même, les panneaux 65 peuvent être retirés de l'enceinte de cuisson 27 pour nettoyage sans avoir à démonter d'autres pièces de l'appareil de cuisson 1.

Selon le mode de réalisation présenté, les panneaux 65 et les plateaux 53, 55 sont dimensionnés pour pouvoir être lavés dans un lave-vaisselle. Comme il va de soi l'invention ne se limite pas à la seule forme d'exécution de cet appareil de cuisson décrit ci-dessus à titre d'exemple. L'étendu de protection est défini par les revendications.

## Revendications

1. Appareil de cuisson (1) comprenant :
- un puits de cuisson (7) définissant une enceinte de cuisson (27) présentant une ouverture (5) supérieure,
- une grille (9) et/ou plaque (3) de cuisson positionnée en regard de l'ouverture (5),
- au moins un brûleur (29) présentant au moins une partie chauffante disposée dans l'enceinte de cuisson (27),
dans lequel l'enceinte de cuisson (27) comprend une paroi latérale interne comportant au moins un premier panneau avant ou arrière (65, 73, 77) et respectivement un second panneau avant ou arrière (65, 75, 79) adjacents, amovibles et destinés à être solidarisés à un support compris dans l'appareil,
dans lequel le premier panneau avant ou arrière (65, 73, 77) et respectivement le second panneau avant ou arrière (65, 75, 79) comprennent des bords superposés dans une zone de recouvrement (89) s'étendant selon une ligne de pente commune (97) au premier panneau avant ou arrière (65, 73, 77) et respectivement au second panneau avant ou arrière (65, 75, 79)
**caractérisé en ce que** la pente est orientée vers l'intérieur du puits de cuisson (7)

2. Appareil de cuisson (1) selon l'une des revendications précédentes, dans lequel le premier panneau avant ou arrière (65, 73, 77) présente une complémentarité de forme respectivement avec le second panneau avant ou arrière (65, 75, 79) sur la zone de recouvrement (89).

3. Appareil de cuisson (1) selon la revendication 2, dans lequel le premier panneau avant ou arrière (65, 73, 77) présente une bordure (93, 99) dans la zone de recouvrement (89), la bordure (93, 99) étant un profilé (95, 101) selon la ligne de pente commune (97), le profilé (95, 101) présentant une forme convexe par rapport à l'intérieur du puits de cuisson (7) et une forme concave par rapport à l'extérieur du puits de cuisson (7).

4. Appareil de cuisson (1) selon l'une des revendications précédentes, dans lequel, l'enceinte de cuisson (27) comprend un troisième panneau transversal (65, 69) amovible transverse au premier panneau avant ou arrière (65, 73, 77) , le premier panneau avant ou arrière (65, 73, 77) et le troisième panneau transversal (65, 69) présentant une zone de recouvrement (91) s'étendant transversalement à la pente du premier panneau avant ou arrière (65, 73, 77) en regard d'un rabat ménagé sur le premier panneau avant ou arrière (65,73, 77) ou sur le troisième panneau transversal (65, 69).

5. Appareil de cuisson (1) selon l'une des revendications précédentes, dans lequel au moins un du premier panneau avant ou arrière (65, 73, 77) ou du second panneau avant ou arrière (65, 75, 79) présente une encoche (87) ménageant un espace de l'enceinte de cuisson (27) pour un emplacement d'un brûleur (29).

6. Appareil de cuisson (1) selon l'une des revendications précédentes, dans lequel le support (41) de l'enceinte de cuisson (27) comprend un cadre (43) entourant l'ouverture (5) supérieure, le premier panneau avant ou arrière (65, 73, 77), le second panneau avant ou arrière (65, 75, 79) et le troisième panneau transversal (65, 69) comprenant des moyens de solidarisation amovibles au cadre (43).

7. Appareil de cuisson (1) selon la revendication 6, dans lequel le support (41) comprend un ensemble de profilés (45) s'étendant à partir du cadre (43) autour du puits de cuisson (7), des ouvertures du support (41) étant ménagées entre les profilés (45).

8. Appareil de cuisson (1) selon l'une des revendications précédentes, dans lequel l'enceinte de cuisson (27) comprend au moins un réservoir (53, 55) amovible constituant une zone de recueil de résidus de cuisson.

9. Appareil de cuisson (1) selon la revendication 8, dans lequel le réservoir (53, 55) s'étend selon au moins une direction horizontale vers l'extérieur du puits au-delà de la base de la pente du panneau (65) attenant.

10. Appareil de cuisson (1) selon l'une des revendications 8 ou 9, dans lequel le réservoir (53, 55) est ménagé à distance du premier panneau avant ou arrière (65, 73, 77), du second panneau avant ou arrière (65, 75, 79) et du troisième panneau transversal (65, 69).

## Patentansprüche

1. Kochgerät (1), das Folgendes umfasst:
- einen Kochschacht (7), der einen Kochraum (27) mit einer oberen Öffnung (5) definiert,
- ein(e) Kochgitter (9) und/oder -platte (3), das/die gegenüber der Öffnung (5) positioniert ist/sind,
- mindestens einen Brenner (29) mit mindestens einem im Kochraum (27) angeordneten Heizteil,
wobei der Kochraum (27) eine innere Seitenwand aufweist, die mindestens eine erste Front- oder Rückplatte (65, 73, 77) bzw. eine zweite Front- oder Rückplatte (65, 75, 79) umfasst, die aneinander angrenzen, abnehmbar und zum Befestigen an einem in dem Gerät enthaltenen Träger ausgelegt sind,
wobei die erste Front- oder Rückplatte (65, 73, 77) bzw. die zweite Front- oder Rückplatte (65, 75, 79) in einer Überlappungszone (89) übereinanderliegende Ränder aufweisen, die sich entlang einer gemeinsamen Gefällelinie (97) zur ersten Front- oder Rückplatte (65, 73, 77) bzw. zur zweiten Front- oder Rückplatte (65, 75, 79) erstrecken, **dadurch gekennzeichnet, dass** das Gefälle ins Innere des Kochschachts (7) orientiert ist.

2. Kochgerät (1) nach einem der vorherigen Ansprüche, wobei die erste Front- oder Rückplatte (65, 73, 77) mit der zweiten Front- oder Rückplatte (65, 75, 79) in der Überlappungszone (89) einen Formschluss aufweist.

3. Kochgerät (1) nach Anspruch 2, wobei die erste Front- oder Rückplatte (65, 73, 77) in der Überlappungszone (89) eine Umrandung (93, 99) aufweist, wobei die Umrandung (93, 99) ein Profil (95, 101) gemäß der gemeinsamen Gefällelinie (97) ist, wobei das Profil (95, 101) eine konvexe Form in Bezug auf das Innere des Kochschachts (7) und eine konkave Form in Bezug auf das Äußere des Kochschachts (7) aufweist.

4. Kochgerät (1) nach einem der vorherigen Ansprüche, wobei der Kochraum (27) eine dritte Querplatte (65, 69) aufweist, die abnehmbar quer zur ersten Front- oder Rückplatte (65, 73, 77) angeordnet ist, wobei die erste Front- oder Rückplatte (65, 73, (65, 73, 77) und die dritte Querplatte (65, 69) eine Überlappungszone (91) aufweisen, die sich quer zum Gefälle der ersten Front- oder Rückplatte (65, 73, 77) gegenüber einer an der ersten Front- oder Rückplatte (65, 73, 77) oder an der dritten Querplatte (65, 69) vorgesehenen Klappe erstreckt.

5. Kochgerät (1) nach einem der vorherigen Ansprüche, wobei die erste Front- oder Rückplatte (65, 73, 77) und/oder die zweite Front- oder Rückplatte (65, 75, 79) eine Aussparung (87) aufweist/-en, die einen Raum der Kochkammer (27) zum Platzieren eines Brenners (29) bietet.

6. Kochgerät (1) nach einem der vorherigen Ansprüche, wobei der Träger (41) des Kochraums (27) einen die obere Öffnung (5) umgebenden Rahmen (43) aufweist, wobei die erste Front- oder Rückplatte (65, 73, 77), die zweite Front- oder Rückplatte (65, 75, 79) und die dritte Querplatte (65, 69) Mittel zum abnehmbaren Befestigen am Rahmen (43) aufweisen.

7. Kochgerät (1) nach Anspruch 6, wobei der Träger (41) einen Satz Profile (45) aufweist, die sich vom Rahmen (43) um den Kochschacht (7) herum erstrecken, wobei zwischen den Profilen (45) Öffnungen im Träger (41) vorgesehen sind.

8. Kochgerät (1) nach einem der vorherigen Ansprüche, wobei der Kochraum (27) mindestens ein abnehmbares Reservoir (53, 55) aufweist, das eine Kochrückstandsauffangzone bildet.

9. Kochgerät (1) nach Anspruch 8, wobei sich das Reservoir (53, 55) in mindestens einer horizontalen Richtung vom Schacht über die Basis der Schräge der angrenzenden Platte (65) hinaus erstreckt.

10. Kochgerät (1) nach Anspruch 8 oder 9, wobei das Reservoir (53, 55) von der ersten Front- oder Rückplatte (65, 73, 77), der zweiten Front- oder Rückplatte (65, 75, 79) und der dritten Querplatte (65, 69) beabstandet ist.

## Claims

1. Cooking appliance (1) comprising:
- a well (7) defining a cooking chamber (27) having a top opening (5),
- a grill (9) and/or hotplate (3) positioned opposite the opening (5),
- at least one burner (29) having at least one heating part disposed in the cooking chamber (27),
wherein the cooking chamber (27) comprises an internal lateral wall comprising at least one first front or rear panel (65, 73, 77) and respectively a second front or rear panel (65, 75, 79) adjacent to each other, removable and intended to be secured to a support included in the appliance,
wherein the first front or rear panel (65, 73, 77) and respectively the second front or rear panel (65, 75, 79) comprise edges superimposed in an overlap zone (89) extending along a slope line (97) common to the first front or rear panel (65, 73, 77) and respectively to the second front or rear panel (65, 75, 79),
**characterised in that** the slope is oriented towards the inside of the cooking well (7).

2. Cooking appliance (1) according to one of the preceding claims, wherein the first front or rear panel (65, 73, 77) has complementarity of shape respectively with the second front or rear panel (65, 75, 79) on the overlap zone (89).

3. Cooking appliance (1) according to claim 2, wherein the first front or rear panel (65, 73, 77) has a border (93, 99) in the overlap zone (89), the border (93, 99) being a profiled section (95, 101) along the common slope line (97), the profiled section (95, 101) having a convex shape with respect to the inside of the cooking well (7) and a concave shape with respect to the outside of the cooking well (7).

4. Cooking appliance (1) according to one of the preceding claims, wherein the cooking chamber (27) comprises a removable transverse third panel (65, 69) transverse to the first front or rear panel (65, 73, 77), the first front or rear panel (65, 73, 77) and the transverse third panel (65, 69) having an overlap zone (91) extending transversely to the slope of the first front or rear panel (65, 73, 77) facing a flap formed on the first front or rear panel (65, 73, 77) or on the transverse third panel (65, 69).

5. Cooking appliance (1) according to one of the preceding claims, wherein at least one of the first front or rear panel (65, 73, 77) or of the second front or rear panel (65, 75, 79) has a recess (87) providing a space of the cooking chamber (27) for a location of a burner (29).

6. Cooking appliance (1) according to one of the preceding claims, wherein the support (41) of the cooking chamber (27) comprises a frame (43) surrounding the top opening (5), the first front or rear panel (65, 73, 77), the second front or rear panel (65, 75, 79) and the transverse third panel (65, 69) comprising removable means for connection to the frame (43).

7. Cooking appliance (1) according to claim 6, wherein the support (41) comprises a set of profiled sections (45) extending from the frame (43) around the cooking well (7), openings of the support (41) being provided between the profiled sections (45).

8. Cooking appliance (1) according to one of the preceding claims, wherein the cooking chamber (27) comprises at least one removable reservoir (53, 55) constituting a zone for collecting cooking residues.

9. Cooking appliance (1) according to claim 8, wherein the reservoir (53, 55) extends in at least one horizontal direction towards the outside of the well beyond the base of the slope of the adjoining panel (65).

10. Cooking appliance (1) according to one of claims 8 or 9, wherein the reservoir (53, 55) is provided at a distance from the first front or rear panel (65, 73, 77), from the second front or rear panel (65, 75, 79) and from the transverse third panel (65, 69).
